# EUROPÄISCHE PATENTANMELDUNG

(11) **EP 4 570 546 A1**
(43) Veröffentlichungstag der Anmeldung: **18.06.2025**
(21) Anmeldenummer: 23217178.5
(22) Anmeldetag: 15.12.2023
(51) Int. Cl.: B60J 5/14

(54) **NUTZFAHRZEUGAUFBAU UND NUTZFAHRZEUG MIT ROLLTOR**

(71) Anmelder: Schmitz Cargobull AG, 48341 Altenberge (DE)
(72) Erfinder: OVERBECK, Nicolas, 46399 Bocholt (DE); FRIELING, Stephan, 48366 Laer (DE)
(74) Vertreter: Cohausz & Florack

(57) **Zusammenfassung**

Ein Nutzfahrzeugaufbau (2) für ein Nutzfahrzeug mit einem Rolltor (8), umfassend ein von einer geschlossenen Stellung in eine geöffnete Stellung und zurück verstellbarem Wandelement (9) und ein Schienensystem (10) zum Führen des Wandelements (9), wobei das Wandelement (9) eine Reihe von Paneelen (16,17) aufweist, wobei aneinander angrenzende Paneele (16,17) über ein oberes Verbindungsprofil (18) und ein unteres Verbindungsprofil (19) miteinander verbunden sind, wobei wenigstens ein oberes Verbindungsprofil (18) oder ein unteres Verbindungsprofil (19) als mit einem Paneelgrundkörper verbundenes Federprofil (23) mit einem im Querschnitt wenigstens halbkreisförmigen Federbereich (25) ausgebildet ist, wobei das Federprofil (23) mit einem oberen Verbindungsprofil (18) oder einem unteren Verbindungsprofil (19) in Form eines mit einem Paneelgrundkörper (27) verbundenen Nutprofils (22) formschlüssig verbunden ist und wobei der halbkreisförmige Federbereich (25) im Querschnitt einen gedachten Federkreis (30) definiert. Es ist vorgesehen, dass das Federprofil (23) über wenigstens einen über den Federkreis (30) nach außen vorstehenden Steg (28) mit dem Paneelgrundkörper (27) verbunden ist und eine von außen durch das Nutprofil (22) beim Verbinden mit dem Federprofil (23) abschnittsweise zugängliche, innerhalb des Federkreises (30) angeordnete Aufnahme (29) aufweist.

## Beschreibung

Die Erfindung betrifft einen Nutzfahrzeugaufbau für ein Nutzfahrzeug, insbesondere Lastkraftwagen, Anhänger oder Sattelauflieger, mit einem Rolltor, umfassend ein von einer den Nutzfahrzeugaufbau verschließenden geschlossenen Stellung in eine den Nutzfahrzeugaufbau zum Be- und/oder Entladen freigebende geöffnete Stellung und zurück verstellbaren Wandelement und ein Schienensystem zum Führen des Wandelements während des Verstellens des Wandelements von der geschlossenen Stellung in die geöffnete Stellung und zurück, wobei das Wandelement eine Reihe von Paneelen aufweist, wobei aneinander angrenzende Paneele über ein oberes Verbindungsprofil und ein unteres Verbindungsprofil miteinander verbunden sind, wobei wenigstens ein oberes Verbindungsprofil oder ein unteres Verbindungsprofil als mit einem Paneelgrundkörper verbundenes Federprofil mit einem im Querschnitt wenigstens halbkreisförmigen Federbereich ausgebildet ist, wobei das Federprofil mit einem oberen Verbindungsprofil oder einem unteren Verbindungsprofil in Form eines mit einem Paneelgrundkörper verbundenen Nutprofils formschlüssig verbunden ist und wobei der halbkreisförmige Federbereich im Querschnitt einen gedachten Federkreis definiert.

Nutzfahrzeuge, beispielsweise in Form von Lastkraftwagen, Anhängern und Sattelaufliegern, sind insbesondere für den Transport von Gütern, vorzugsweise Stückgütern, im öffentlichen Straßenverkehr vorgesehen. Zu diesem Zweck weisen die Nutzfahrzeuge unterschiedliche Arten von Nutzfahrzeugaufbauten auf, welche der Aufnahme der zu transportierenden Güter in einem Laderaum dienen.

So sind beispielsweise Planenaufbauten bekannt, bei denen die Seitenwände und das Dach durch wenigstens eine Planeneinheit verschlossen sind. Die Stirnwand ist bei Planenaufbauten meist als feste Wand ausgebildet, während die Rückwand meist Flügeltüren aufweist, um den Laderaum bedarfsweise von hinten zu beladen. Wenn eine Planeneinheit entlang der Seitenwand verschoben werden kann, spricht man auch von sogenannten Curtainsidern.

Neben den Planenaufbauten sind beispielsweise auch Kofferaufbauten mit festen Seitenwänden, einer festen Stirnwand und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport, geeignet. Die Rückwand der Kofferaufbauten wird meist durch zwei Flügeltüren oder ein Rolltor verschlossen.

Die Kofferaufbauten weisen oftmals an der Stirnwand, dem Dach und/oder den Seitenwänden zweischalige Paneele auf. Die Paneele umfassen dabei eine äußere und eine innere, strukturgebende Decklage sowie eine dazwischen vorgesehene Kernlage, die typischerweise aus einem, insbesondere geschäumten, Kunststoff gebildet wird. Dabei können die innere und/oder die äußere Decklage selbst bedarfsweise mehrlagig aufgebaut sein. Insbesondere geschäumte Kernlagen oder Kernlagen mit einem hohen Luftanteil können für ein hohes Maß an thermischer Isolation des Laderaums sorgen. Entsprechende Nutzfahrzeugaufbauten werden daher zweckmäßig für Kühltransporte eingesetzt. Um den Laderaum zu kühlen, weisen diese Nutzfahrzeuge typischerweise Transportkältemaschinen auf, die an der Stirnwand des Nutzfahrzeugaufbaus montiert sind, Luft aus dem Laderaum ansaugen, die angesaugte Luft kühlen und die gekühlte Luft anschließend wieder in den Laderaum zurückblasen.

Darüber hinaus sind Kofferaufbauten mit einschaligen Paneelen bekannt, die einen umlaufenden Rahmen oder eine von dem Paneel verschlossene Gitterstruktur aus vertikalen und horizontalen Profilen aufweisen. Das Paneel wird dabei meist aus einem oder aus mehreren Paneelelementen gebildet, die wenigstens im Wesentlichen aus einem glasfaserverstärkten Kunststoff, Stahl oder Aluminium gebildet sind, sowie bedarfsweise lackiert sind. Um beispielsweise das Dach abzustützen, können die Paneele mit einer Mehrzahl von zur Aussteifung des Paneels vorgesehenen, wenigstens im Wesentlichen quer zur Längsrichtung des Paneels ausgerichteten und in Längsrichtung des Paneels zwischen den Rändern des Paneels angeordneten Pfeilerelementen vorgesehen sein. Aufgrund der einschaligen Bauweise dieser Nutzfahrzeugaufbauten werden diese für den sogenannten Trockentransport, aber nur in Ausnahmefällen für den Kühltransport eingesetzt. Nutzfahrzeuge mit entsprechenden Kofferaufbauten werden auch als Trockenfrachter bezeichnet.

Nutzfahrzeugaufbauten, insbesondere Kofferaufbauten, deren Rückwand keine Flügeltüren aufweist, sind typischerweise mit einem Rolltor zum Verschließen der Rückwand ausgestattet. Die Rolltore weisen ein Wandelement auf, das aus einer Reihe von Paneelen zusammengesetzt ist und entlang eines Schienensystems von einer unteren, die Rückwand verschließenden, geschlossenen Stellung in eine obere, die Rückwand zum Be- und/oder Entladen freigebende, geöffnete Stellung verstellt werden kann. Dazu erstreckt sich das Schienensystem sowohl abschnittsweise im Bereich des Rückwandrahmens als auch abschnittsweise im Bereich des Dachs.

In vielen Fällen handelt es sich bei den Paneelen um Profile aus Kunststoff, Stahl oder Aluminium, welche einen Hohlraum oder mehrere Hohlräume einschließen, um leicht und doch stabil ausgebildet werden zu können. Bei geschlossenem Rolltor sind die Paneele des Wandelements der Reihe nach übereinander angeordnet, wobei die Paneele sich quer zur Rückwand erstrecken und schwenkbar miteinander verbunden sind. Zur Ausbildung der Verbindung sind zumindest die mittleren Paneele mit oberen Verbindungsprofilen und unteren Verbindungsprofilen versehen, die so korrespondierend zueinander ausgebildet sind, dass sie einerseits formschlüssig miteinander verbunden und doch um eine Längsachse parallel zu den Paneelen gegeneinander geschwenkt werden können. Das obere Paneel des Wandelements kann an seinem oberen Rand ein Verbindungsprofil zur Aufnahme einer Dichtung zum Abdichten des Wandelements gegenüber einem oberen Teil des Rückwandrahmens aufweisen. Das untere Paneel kann an seinem unteren Rand ein Verbindungsprofil zur Aufnahme einer Dichtung zum Abdichten des Wandelements gegenüber dem Ladeboden oder dem unteren Teil des Rückwandrahmens aufweisen.

Die miteinander verbundenen oberen Verbindungsprofile und unteren Verbindungsprofile sind jeweils mit einem Paneelgrundkörper des Paneels verbunden. Dabei kann das Federprofil im Querschnitt zur Längserstreckung des Paneels mit einem wenigstens halbkreisförmigen Federbereich versehen sein. Der halbkreisförmige Federbereich definiert dabei in dem entsprechenden Querschnitt einen gedachten Federkreis, der als solcher nicht Gegenstand des Federprofils ist. Der halbkreisförmige Federbereich liegt jedoch wenigstens im Wesentlichen auf dem Umfang dieses gedachten Federkreises. Das Federprofil wird dem Umfang des Federkreises jedoch nicht umlaufend folgen. Zudem ist das Federprofil mit einem oberen Verbindungsprofil oder einem unteren Verbindungsprofil in Form eines mit einem Paneelgrundkörper verbundenen Nutprofils formschlüssig verbunden. Der Nutbereich und der Federbereich können dabei bedarfsweise korrespondierend zueinander ausgebildet sein.

Rolltore machen das Aufschwenken von Flügeltüren an der Rückwand des Nutzfahrzeugaufbaus entbehrlich, was aus Platzgründen nicht immer problemlos erfolgen kann. Rolltore sind grundsätzlich aber relativ aufwendig und damit teuer.

Daher liegt der vorliegenden Erfindung die Aufgabe zugrunde, Nutzfahrzeugaufbauten und Nutzfahrzeuge der eingangs genannten und zuvor näher erläuterten Art derart auszugestalten und weiterzubilden, dass diese einfacher und kostengünstiger gefertigt werden können.

Diese Aufgabe ist bei einem Nutzfahrzeugaufbau nach dem Oberbegriff von Anspruch 1 dadurch gelöst, dass das Federprofil über wenigstens einen über den Federkreis nach außen vorstehenden Steg mit dem Paneelgrundkörper verbunden ist und eine von außen durch das Nutprofil beim Verbinden mit dem Federprofiel abschnittsweise zugängliche, innerhalb des Federkreises angeordnete Aufnahme aufweist.

Die genannte Aufgabe ist ferner bei einem Nutzfahrzeug nach Anspruch 15 dadurch gelöst, dass der Nutzfahrzeugaufbau nach einem der Ansprüche 1 bis 14 ausgebildet ist.

Das Federprofil ist über wenigstens einen über den Federkreis nach außen vorstehendem Steg mit dem Paneelgrundkörper verbunden. In den Bereich oder die Bereiche jenseits des Stegs, der sich in Längserstreckung des Paneels in Form einer Rippe erstreckt, kann das korrespondierende Nutprofil eingreifen, um ein hinreichendes und einfaches Schwenken der miteinander verbundenen Paneele gegeneinander zu ermöglichen. Zudem weist das Federprofil noch eine innerhalb des Federkreises angeordnete Aufnahme auf. Dies bedeutet, dass die Aufnahme wenigstens teilweise, insbesondere vollständig innerhalb des Federkreises angeordnet ist. Die Aufnahme ist zudem von außerhalb des Federkreises zugänglich. Auf diese Weise kann das Nutprofil abschnittsweise von außerhalb des Federkreises in die Aufnahme eingreifen. Was insbesondere beim Verbinden von Federprofil und Nutprofil der Fall sein kann, um die Verbindung einfach herzustellen. Auf die beschriebene Weise lassen sich die Federprofile und die Nutprofile des Wandelements leicht herstellen und auch leicht miteinander verbinden, was zu einer kostengünstigeren, weil einfacheren Herstellung führt.

Die über das Federprofil und das Nutprofil miteinander verbundenen Paneele können leicht, zuverlässig und definiert gegeneinander geschwenkt werden, wenn das Nutprofil einen wenigstens halbkreisförmigen Nutbereich aufweist, der korrespondierend zum wenigstens halbkreisförmigen Federbereich ausgebildet ist. Wenn der halbkreisförmige Federbereich wenigstens abschnittsweise in dem halbkreisförmigen Nutbereich aufgenommen ist, können der halbkreisförmige Federbereich und der halbkreisförmige Nutbereich wenigstens abschnittsweise aneinander abgleiten, so dass die verbundenen Paneele beim gegenseitigen Schwenken geführt bleiben.

Die genannten Vorteile treten noch umfassender zu Tage, wenn der Nutbereich und/oder der Federbereich wenigstens im Wesentlichen dreiviertelkreisförmig ausgebildet ist. Dann blieben die Paneele beim Schwenken immer in einer vorbestimmten Ausrichtung relativ zueinander.

Einfach zu fertigen ist es, das Federprofil als geschlossenes Teilprofil auszubilden. Zudem ist es leicht und materialschonend, das Teilprofil als Hohlprofilabschnitt auszugestalten.

Wenn der wenigstens halbkreisförmige Federbereich sich bis in einen Bereich zwischen dem Paneelgrundkörper und dem Federprofil erstreckt, entsteht zwischen dem Paneelgrundkörper und dem Federbereich ein Freiraum, der zur Aufnahme eines Teils des wenigstens halbkreisförmigen Nutbereichs genutzt werden kann. Dabei kann der wenigstens halbkreisförmige Nutbereich je nach Ausgestaltung des Paneels in den Freiraum eingreifen, wenn die Paneele gegeneinander geschwenkt sind und/oder wenn die miteinander verbundenen Paneele wenigstens im Wesentlichen parallel zueinander ausgerichtet sind. Der Abstand zwischen dem wenigstens halbkreisförmigen Federbereich und dem Paneelgrundkörper wird dabei bedarfsweise durch die Länge des Stegs zwischen dem Federprofil und dem Paneelgrundkörper definiert. Besonders zweckmäßig ist es dabei, wenn ein Rand des Nutprofils, welcher einen Teil des wenigstens halbkreisförmigen Nutbereichs bildet, in den Raum zwischen dem wenigstens halbkreisförmigen Federbereich und dem Paneelgrundkörper greift.

Um das Federprofil mit dem angrenzenden Nutprofil einfach verbinden zu können, kann das Nutprofil eine Öffnung zum Einwinkeln des Federprofils aufweisen. Das Federprofil kann dann in einer Ausrichtung an das angrenzende Nutprofil angenähert werden, in der die beiden zu verbindenden Paneele einen erheblichen Winkel zueinander einnehmen. Der Winkel zwischen den Außenseiten der Paneele kann dabei vorzugsweise wenigstens 270° betragen. In dieser relativen Ausrichtung kann dann das Federprofil abschnittsweise in das Nutprofil eingesetzt und sodann gegenüber dem Nutprofil durch Schwenken der Paneele gegeneinander in das Nutprofil eingewinkelt werden. Besonders zweckmäßig ist es dabei, wenn sich der wenigstens halbkreisförmige Nutbereich des Nutprofils von beiden Seiten bis an die Öffnung des Nutprofils heran erstreckt. Dann kann ein besonders breiter Nutbereich erzielt werden, der mit den zuvor genannten Vorteilen einhergeht.

Ein stabiles Wandelement in der geschlossenen Stellung kann erreicht werden, wenn ein Rand des Nutprofils bei wenigstens im Wesentlichen parallel zueinander ausgerichteten, miteinander verbundenen Paneelen in Anlage an den Steg zur Verbindung des Federprofils mit dem zugehörigen Paneelgrundkörper gelangt. Auf diese Weise kann beispielsweise ein Überschwenken der Paneele gegeneinander verhindert und das Wandelement in der geschlossenen Stellung ausgesteift werden. Dies bietet sich besonders an, wenn ein Abschnitt des Nutprofils im Bereich des wenigstens halbkreisförmigen Nutbereichs in Anlage an den Steg des Federprofils gelangt. Dann können die miteinander verbundenen Paneele beim Schwenken zweckmäßig gegeneinander geführt sein.

Damit die Aufnahme des Federprofils zum Einwinkeln des Federprofils in das Nutprofil genutzt werden kann, ohne das Schwenken der verbundenen Paneele gegeneinander übermäßig zu beeinträchtigen, kann vorgesehen sein, dass die Aufnahme des Federprofils abschnittsweise, insbesondere vollständig im Bereich der Öffnung des Nutprofils angeordnet ist. Dies ist vorzugsweise dann der Fall, wenn die miteinander verbundenen Paneele wenigstens im Wesentlichen parallel zueinander ausgerichtet sind. In diesem Fall wird das Wandelement in der geschlossenen Stellung weiter ausgesteift.

Um das Wandelement einfach und zuverlässig von der geschlossenen Stellung in die geöffnete Stellung und wieder zurück verstellen zu können, bietet es sich an, wenn das Federprofil gegenüber dem Nutprofil schwenkbar in dem Nutprofil gehalten ist. Für eine bessere gegenseitige Führung von Federprofil und Nutprofil ist es dabei weiter bevorzugt, wenn sich die Schwenkachse wenigstens im Wesentlichen durch den Mittelpunkt des Federkreises erstreckt.

Zur Herstellung eines Wandelements in der gewünschten Form und mit der gewünschten Stabilität bietet es sich an, wenn sich der wenigstens halbkreisförmige Nutbereich bei wenigstens im Wesentlichen parallel zueinander ausgerichteten, aneinander angrenzenden Paneelen bis zu einer Ebene erstreckt, welche einerseits wenigstens im Wesentlichen parallel zu den miteinander verbundenen Paneelen ist und welche andererseits durch die Schwenkachse verläuft. Alternativ oder zusätzlich kann es sich anbieten, wenn sich der wenigstens halbkreisförmige Nutbereich bei wenigstens im Wesentlichen parallel zueinander ausgerichteten, miteinander verbundenen Paneelen einerseits wenigstens im Wesentlichen bis zu einer senkrecht zu den Paneelen verlaufenden und sich durch die Schwenkachse hindurch erstreckende Ebene erstreckt. In beiden Fällen erlaubt dies eine gute Führung und eine zweckmäßige Verstellbarkeit der Paneele gegeneinander.

Unabhängig davon ist es zweckmäßig, wenn alle aneinander angrenzenden Paneele des Wandelements über ein oberes Verbindungsprofil und ein unteres Verbindungsprofil miteinander verbunden sind, um ein gemeinsames Wandelement zu bilden. Dabei können die oberen Verbindungsprofile und die unteren Verbindungsprofile jeweils derart korrespondierend und gleichartig zueinander ausgebildet sein, dass jedes obere Verbindungsprofil mit jedem unteren Verbindungsprofil formschlüssig verbindbar ist. Auf diese Weise kann das Wandelement sehr einfach und schnell gefügt werden, da keine komplizierte Reihenfolge beim Verbinden der Paneele untereinander eingehalten werden muss.

Wenn die oberen Verbindungsprofile und/oder die unteren Verbindungsprofile untereinander wenigstens im Wesentlichen identisch ausgebildet sind, können zudem in hohem Maße gleiche Fertigungsprozesse genutzt oder sogar Gleichteile verwendet werden, was die Fertigung der Wandelemente weiter vereinfacht. Auf diese Weise können zudem die Herstellungskosten für die Paneele gesenkt werden.

Zur einfachen, schnellen und kostengünstigen Herstellung eines Rolltors bietet es sich grundsätzlich an, wenn das obere Verbindungsprofil und das untere Verbindungsprofil derart korrespondierend zueinander ausgebildet sind, dass die Ausgestaltung der Verbindungsprofile ein Verbinden derselben durch gegenseitiges Einwinkeln erlaubt. Das Einwinkeln kann dabei durch ein Schwenken wenigstens im Wesentlichen um die Längsrichtung von wenigstens einem der beiden zu verbindenden Paneele erfolgen. Das Einwinkeln kann einfach, schnell und zuverlässig erfolgen.

Um diesen Vorteil noch besser auszunutzen, bietet es sich an, wenn alle oberen Verbindungsprofile und alle unteren Verbindungsprofile jeweils derart korrespondierend zueinander ausgebildet sind, dass jedes untere Verbindungsprofil mit jedem oberen Verbindungsprofil durch gegenseitiges Einwinkeln verbindbar ist. Dann muss nicht sorgfältig auf die Reihenfolge geachtet werden, in der die Paneele eines Wandelements untereinander verbunden werden. Auch hierbei kann es sich der Einfachheit halber besonders anbieten, wenn das Einwinkeln jeweils um eine Längsrichtung eines der beiden jeweils miteinander zu verbindenden Paneele erfolgt.

Das obere Verbindungsprofil des obersten Paneels wird nicht zur Verbindung mit einem weiteren Paneel des Wandelements benötigt. Es kann aber zweckmäßig genutzt werden, indem das obere Verbindungsprofil insbesondere formschlüssig, über Niete und/oder über Schrauben mit einer Dichtleiste zur Abdichtung des Rolltors zu einem oberen Abschnitt eines Rückwandrahmens verbunden ist. Eine formschlüssige Verbindung kann zuverlässig, langlebig und einfach zu fügen sein. Schrauben ermöglicht bedarfsweise das problemlose Austauschen der Dichtleiste, während die Dichtleiste über Nieten schnell und zuverlässig gefügt werden kann. Das Vorstehende gilt in gleicher Weise auch für den Fall, dass das untere Verbindungsprofil des untersten Paneels formschlüssig, über Niete und/oder über Schrauben mit einer Dichtleiste zum Abdichten des Rolltors zum Ladeboden oder zu einem unteren Abschnitt des Rückwandrahmens verbunden ist.

Für das Be- und/oder Entladen des Nutzfahrzeugaufbaus ist es besonders bevorzugt, wenn das Rolltor an der Rückwand des Nutzfahrzeugaufbaus vorgesehen ist. Dabei ist das Rolltor vor Beschädigungen von außen gut geschützt, wenn das Rolltor wenigstens teilweise in einem Rückwandrahmen aufgenommen ist. Grundsätzlich wird es aber zum Zwecke der Führung des Wandelements beim Verstellen in die geöffnete Stellung bevorzugt sein, wenn ein Teil des Schienensystems außerhalb des Rückwandrahmens angeordnet ist, und zwar insbesondere im Bereich des Dachs.

Des Weiteren kann ein entsprechendes Rolltor besonders zweckmäßig in einem Nutzfahrzeugaufbau in Form eines Kofferaufbaus genutzt werden. Der Kofferaufbau umfasst dabei vorzugsweise feste Seitenwände, eine feste Stirnwand und ein festes Dach.

In vielen Fällen handelt es sich bei den Paneelen bevorzugt um Profile aus Kunststoff, Stahl oder Aluminium.

Nachfolgend wird die Erfindung anhand einer lediglich ein Ausführungsbeispiel darstellenden Zeichnung näher erläutert. In der Zeichnung zeigt
- Fig. 1: ein erfindungsgemäßes Nutzfahrzeug mit einem erfindungsgemäßen Nutzfahrzeugaufbau in einer perspektivischen Ansicht,
- Fig. 2: ein Detail des Nutzfahrzeugaufbaus aus Fig. 1 in einem oberen Bereich des Rolltors in einer perspektivischen Schnittansicht,
- Fig. 3: einen Abschnitt des Wandelements des Rolltors aus Fig. 1 in einer seitlichen Schnittansicht,
- Fig. 4A-B: eine Verbindung zweier angrenzender Paneele des Rolltors aus Fig. 1 im verbundenen Zustand und während des Verbindens,
- Fig. 5A-B: zwei unterschiedliche Paneele des Wandelements aus Fig. 1 in einer Seitenansicht,
- Fig. 6: ein Detail des Nutzfahrzeugaufbaus im Bereich des oberen Endes des Wandelements und
- Fig. 7: ein Detail des Nutzfahrzeugaufbaus im Bereich des unteren Endes des Wandelements.

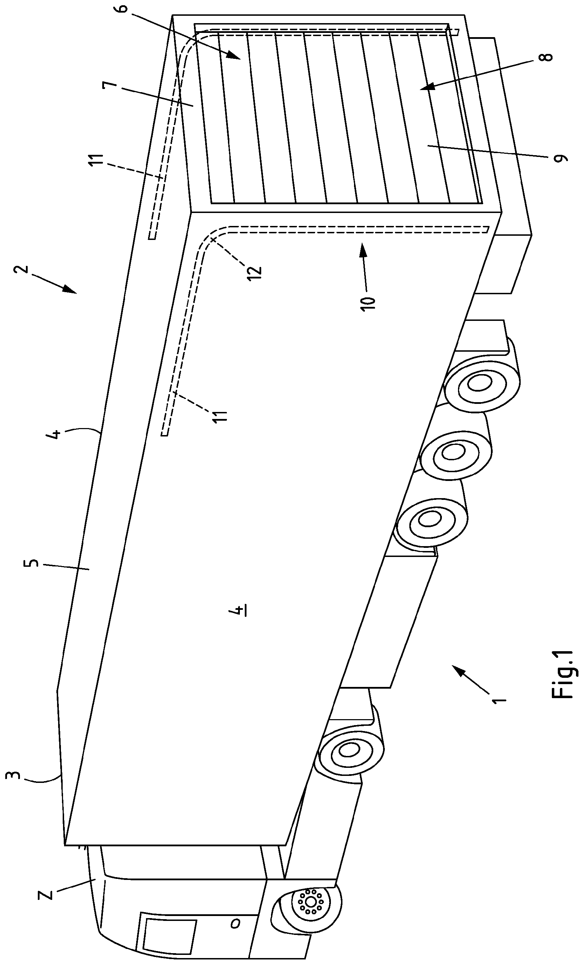

In der Fig. 1 ist ein von einer Zugmaschine Z gezogenes Nutzfahrzeug 1 mit einem Nutzfahrzeugaufbau 2 in Form eines Kofferaufbaus mit einer festen Stirnwand 3, Seitenwänden 4 und einem festen Dach 5 dargestellt. Die Rückwand 6 des Nutzfahrzeugaufbaus 2 wird durch einen Rückwandrahmen 7 und ein Rolltor 8 gebildet, das teilweise im Rückwandrahmen 7 aufgenommen ist. Das Rolltor 8 umfasst ein Wandelement 9, das sich entlang eines Schienensystems 10 an beiden Seiten des Rolltors 8 nach oben und wieder zurück nach unten verstellen lässt. In der oberen, geöffneten Stellung des Wandelements 9 gibt das Wandelement 9 den Rückwandrahmen 7 wenigstens bereichsweise zum Be- und/oder Entladen eines Laderaums des Nutzfahrzeugaufbaus 2 frei. Das Wandelement 9 ist dann wenigstens im Wesentlichen unter dem Dach 5 angeordnet. Zu diesem Zweck umfassen die Schienenelemente 11 des Schienensystems 10 Bögen 12 im Verbindungsbereich von Dach 5 und Rückwandrahmen 7. Außerhalb dieser Bögen 12 erstrecken sich die Schienenelemente 11 des Schienensystems 10 des dargestellten und insoweit bevorzugten Nutzfahrzeugaufbaus 2 wenigstens im Wesentlichen geradlinig. In der unteren, geschlossenen Stellung des Wandelements 9 verschließt das Wandelement 9 den Rückwandrahmen 7. In dieser Stellung ist das Wandelement 9 wenigstens im Wesentlichen parallel zum Rückwandrahmen 7 ausgerichtet und lässt sich das Wandelement 9 am unteren Rand des Rückwandrahmens 7 verriegeln.

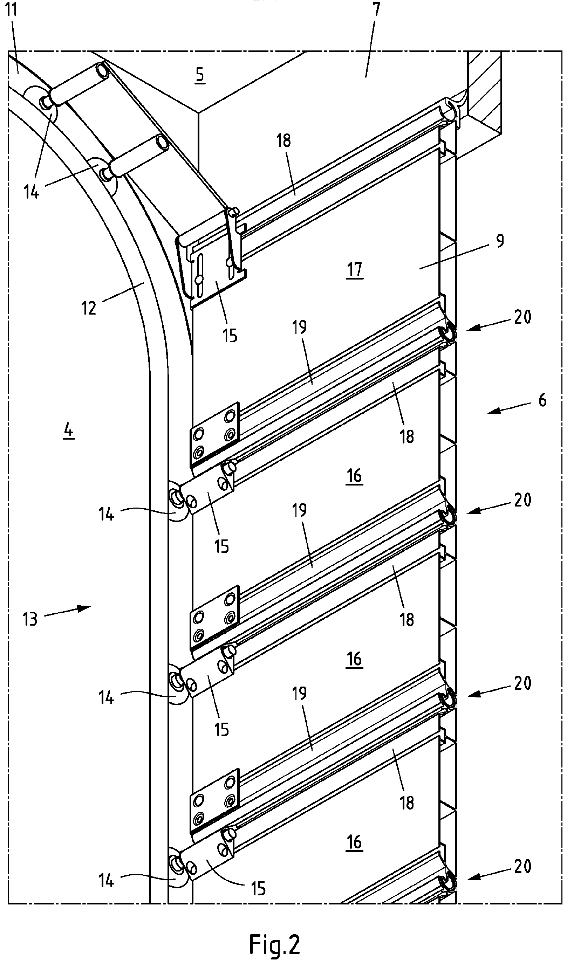

In der Fig. 2 ist ein Detail des Nutzfahrzeugs 1 im Bereich des Rückwandrahmens 7 mit dem oberen Ende des Rolltors 8 aus dem Laderaum 13 heraus gesehen dargestellt. Angrenzend an die Seitenwände 4 ist zu beiden Seiten des Wandelements 9 das separate Schienenelement 11 des Schienensystems 10 vorgesehen, in dem Rollen 14 geführt werden. Die Rollen 14 sind an Rollenhaltern 15 gehalten, die mit Paneelen 16,17 des Wandelements 9 verbunden sind. Beim Verstellen des Wandelements 9 zwischen der geschlossenen und der geöffneten Stellung rollen die Rollen 14 entlang des Schienensystems 10 bzw. der Schienenelemente 11 rauf und runter, wie die zugehörigen Paneele 16,17 nach oben und wieder nach unten verstellt werden. Die Paneele 16,17 sind so formschlüssig und gegeneinander schwenkbar, insbesondere um eine Längsachse drehbar, miteinander verbunden, dass die Paneele 16,17 während des Verstellens des Wandelements 9 sicher miteinander verbunden bleiben.

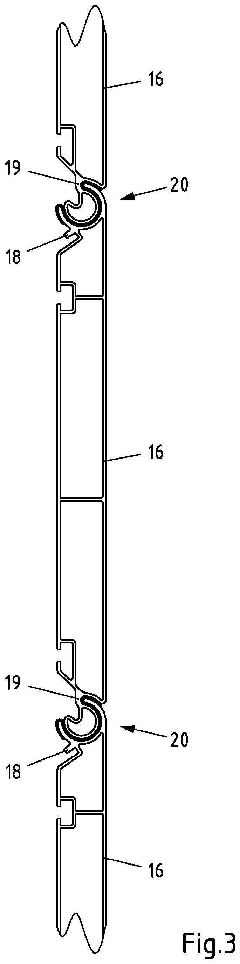

In der Fig. 3 sind drei miteinander verbundene Paneele 16,17 dargestellt. Die Verbindung wird durch obere Verbindungsprofile 18 und untere Verbindungsprofile 19 der Paneele 16,17 bereitgestellt, die formschlüssig ineinandergreifen. Dabei sind jeweils die oberen Verbindungsprofile 18 und die unteren Verbindungsprofile 19 gleichartig und derart korrespondierend zueinander ausgebildet, dass die aneinander angrenzenden Verbindungsprofile 18,19 der aneinander angrenzenden Paneele 16,17 verbunden werden können. Die Verbindbarkeit der Paneele 16,17 untereinander ist aber nicht darauf beschränkt. Vielmehr kann jedes der oberen Verbindungsprofile 18,19 eines beliebigen Paneels 16,17 des Wandelements 9 mit einem unteren Verbindungsprofil 19 eines beliebigen anderen Paneels 16,17 des Wandelements 9 formschlüssig verbunden werden. Bei dem dargestellten und insoweit bevorzugten Wandelement 9 sind die oberen Verbindungsprofile 18 der Paneele 16,17 und ebenso die unteren Verbindungsprofile 19 der Paneele 16,17 identisch zueinander ausgebildet.

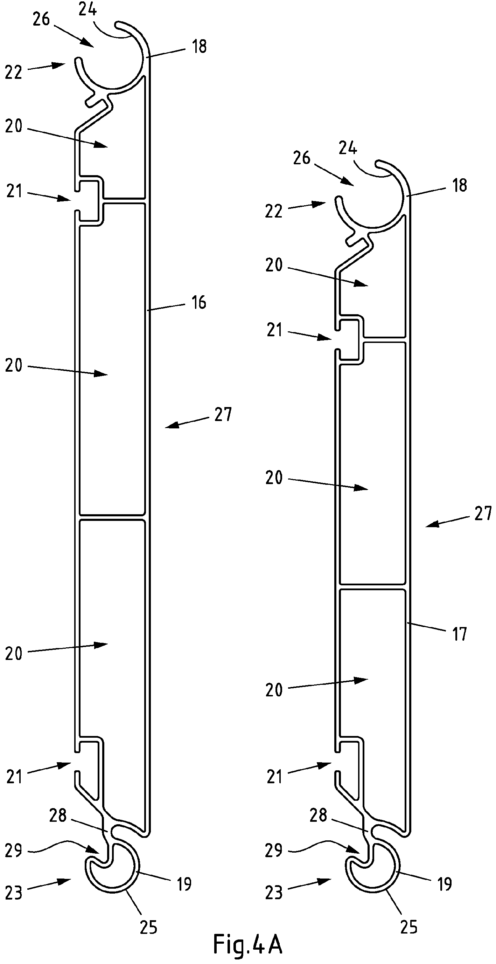

In der Fig. 4A sind zwei unterschiedliche Paneele 16,17 des Wandelements 9 dargestellt. Das dargestellte und insoweit bevorzugte Wandelemente 9 weist dabei das rechts dargestellte, etwas schmalere Paneel 17 nur ein einziges Mal auf. Die anderen Paneele 16 des Wandelements 9 entsprechen alle identisch dem links dargestellten breiteren Paneel 16. Dabei bemisst sich die Breite der dargestellten und insoweit bevorzugten Paneele 16,17 vom oberen Rand des oberen Verbindungsprofils 18 bis zum unteren Rand des unteren Verbindungsprofils 19. In dieser Längserstreckung der Paneele 16,17 weisen diese zwischen den Verbindungsprofilen 18,19 drei Hohlprofilabschnitte 20 auf, die nacheinander folgend und aneinander angrenzend vorgesehen sind. Des Weiteren sind dem oberen Rand und dem unteren Rand der Paneele 16,17 zugeordnet jeweils eine T-Nut 21 vorgesehen. In diesen T-Nuten 21 können Nutensteine eingeführt werden, an denen beispielsweise Rollenhalter 15 zum Halten der in dem Schienensystem 10 geführten Rollen 14 montiert, insbesondere verschraubt, werden können.

Die oberen Verbindungsprofile 18 sind in Form von Nutprofilen 22 ausgebildet, während die unteren Verbindungsprofile 19 in Form von Federprofilen 23 ausgebildet sind. Denkbar wäre es aber auch, dass die unteren Verbindungsprofile die Nutprofile und die oberen Verbindungsprofile die Federprofile sind. Die Nutprofile 22 weisen einen wenigstens im Wesentlichen dreiviertelkreisförmigen Nutbereich 24 auf, in dem ein wenigstens im Wesentlichen dreiviertelkreisförmiger Federbereich 25 eines Federprofils 23 aufgenommen werden kann. Der wenigstens im Wesentlichen dreiviertelkreisförmige Nutbereich 24 erstreckt sich dabei von gegenüberliegenden Seiten bis zu einer Öffnung 26 des Nutprofils 22, über welche das Federprofil 23 in das Nutprofil 22 eingewinkelt werden kann. Das Nutprofil 22 ist im Bereich des Nutbereichs 24 an dem zugehörigen Paneelgrundkörper 27 vorgesehen. An der gegenüberliegenden Seite des Paneelgrundkörpers 27 ist das Federprofil 23 über einen Steg 28 mit dem Paneelgrundkörper 27 verbunden. Das Federprofil 23 ist dabei als ein geschlossenes Teilprofil ausgebildet und im Sinne eines Hohlprofils ausgestaltet. Zwischen dem dreiviertelkreisförmigen Federbereich 25 und dem Steg 28 ist bei dem dargestellten und insoweit bevorzugten Federprofil 23 eine Aufnahme 29 vorgesehen, die durch einen Rücksprung in der Kontur des Federprofils 23 nach innen gebildet wird.

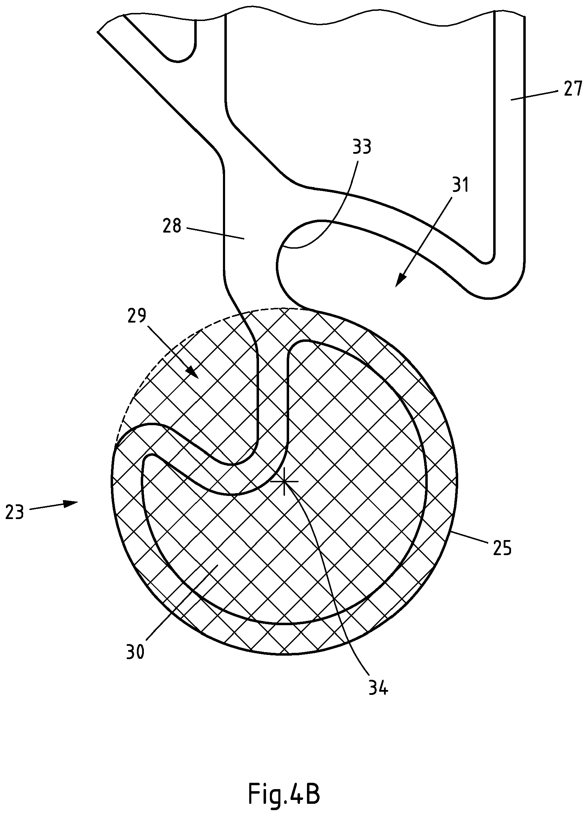

In der vergrößerten Detaildarstellung des Federprofils 23 gemäß Fig. 4B ist ein gedachter Federkreis 30 dargestellt, der in einem Querschnitt des Federprofils 23 durch den wenigstens im Wesentlichen dreiviertelkreisförmigen Federbereich 25 definiert wird. Der Umfang des Federkreises 30 und der Umfang des wenigstens im Wesentlichen dreiviertelkreisförmigen Federbereichs 25 entsprechen einander abschnittsweise wenigstens im Wesentlichen. Außerhalb des wenigstens im Wesentlichen dreiviertelkreisförmigen Federbereichs 25, vorliegend zwischen dem Federbereich 25 und dem Steg 28 ist die Aufnahme 29 innerhalb des Federkreises 30 angeordnet. Im Übrigen sorgt der Steg 28 für einen Abstand zwischen Federprofil 23 und Paneelgrundkörper 27, so dass zwischen dem Federprofil 23 und dem Paneelgrundkörper 27 ein nach außen offener Freiraum 31 verbleibt der sich nach innen bis zum Steg 27 hin erstreckt.

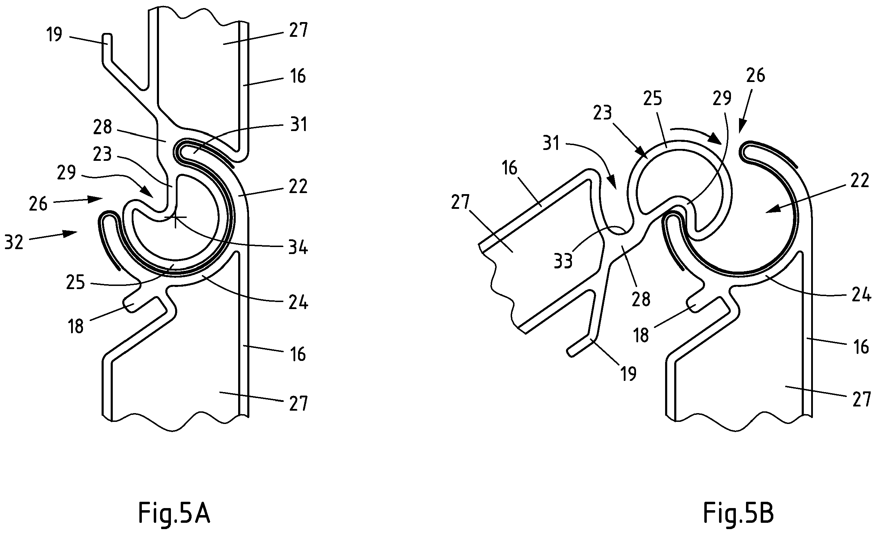

In den Fig. 5A-B ist die Verbindung 32 zwischen einem oberen Verbindungsprofil 18 und einem unteren Verbindungsprofil 19 von zwei aneinander angrenzenden Paneelen 16 im Detail dargestellt, und zwar einmal beim Verbinden durch Einwinkeln ineinander und einmal im miteinander verbunden Zustand. Beim Einwinkeln von Federprofil 23 und Nutprofil 22 ineinander gemäß Fig. 5A wird ein Rand des Nutprofils 22 in die Aufnahme 29 des Federprofils 23 eingesetzt, bevor die beiden zu verbindenden Paneele 16 gegeneinander geschwenkt werden. Dabei gelangt das Federprofil 23 in das Nutprofil 22, wobei das Federprofil 23 weiter in das Nutprofil 22 rutscht, was durch den Pfeil veranschaulicht wird. Auf die beschriebene Weise bildet sich eine formschlüssige Verbindung 32 zwischen den beiden aneinander angrenzenden Paneelen 16 aus. Wenn die beiden Paneele 16 soweit gegeneinander geschwenkt sind, dass die beiden Paneele 16 wenigstens im Wesentlichen parallel zueinander ausgebildet sind, befindet sich die Verbindung 32 in der in der Fig. 5B dargestellten Stellung. Der obere Rand des Nutprofils 22, bis zu dem sich der wenigstens im Wesentlichen dreiviertelkreisförmige Nutbereich 24 erstreckt, greift dann in den Freiraum 31 zwischen dem Federprofil 23 und dem Paneelgrundkörper 27 ein und stößt mit seinem freien Ende an einem vom Steg 28 bereitgestellten Anschlag 33 an, der ein weiteres Schwenken der Paneele 16 in die entsprechende Richtung verhindert. In dieser Ausrichtung der beiden Paneele 16 zueinander ist die Aufnahme 29 wenigstens im Wesentlichen im Bereich der Öffnung 26 des Nutprofils 22 angeordnet und liegen der dreiviertelkreisförmige Nutbereich 24 und der dreiviertelkreisförmige Federbereich 25 wenigstens im Wesentlichen vollständig aneinander an.

Wenn die Paneele 16,17 einmal miteinander verbunden sind, können diese beim Verstellen des Wandelements 9 von der unteren geschlossenen Stellung in die obere geöffnete Stellung um eine Schwenkachse 34 parallel zur Längserstreckung der Paneele 16,17 gegeneinander geschwenkt werden. Dabei erstreckt sich die Schwenkachse 34 vorzugsweise durch den Mittelpunkt des Federkreises 30. Die äußeren Ränder des Nutprofils 22, welche wenigstens im Wesentlichen mit den äußeren Rändern des Nutbereichs 24 zusammenfallen, erstrecken sich bei wenigstens im Wesentlichen parallel zueinander ausgerichteten, miteinander verbundenen Paneelen 16,17 einerseits bis in eine Ebene, die die Schwenkachse 34 enthält und parallel zu den beiden Paneelen 16,17 ausgerichtet ist, und andererseits bis in eine Ebene, die die Schwenkachse 34 aufnimmt und senkrecht zu den Paneelen 16,17 ausgerichtet ist.

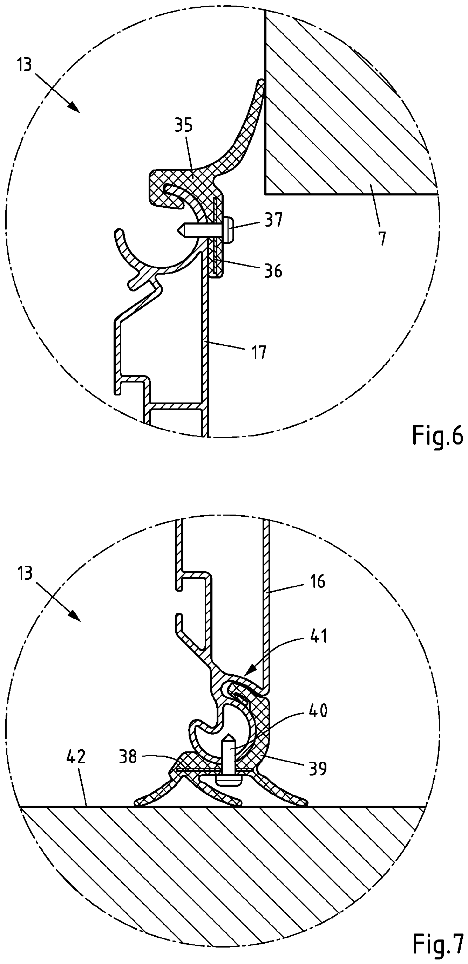

In der Fig. 6 ist der obere Abschnitt des Wandelements 9 dargestellt, wobei das obere Verbindungsprofil 18 des obersten Paneels 17 mit einer Dichtleiste 35 verbunden ist, die sich an einem oberen Rand des Rückwandrahmens 7 von innen abstützt, wenn sich das Wandelement 9 in der unteren, geschlossenen Stellung befindet. In der Dichtleiste 35 ist ein sich in Längsrichtung des Paneels 17 erstreckender Metallstreifen 36 vorgesehen, durch den hindurch die Dichtleiste 35 mit dem Nutbereich 52 des oberen Verbindungsprofils 18 über Schrauben 37 verschraubt ist. Zudem umgreift die Dichtleiste 35 den oberen Rand des Nutbereichs 25 formschlüssig.

In der Fig. 7 ist der untere Abschnitt des Wandelements 9 mit dem unteren Verbindungsprofil 19 des untersten Paneels 16 des Wandelements 9 dargestellt. Am Federbereich 25 des unteren Verbindungsprofils ist eine einen sich in Längsrichtung erstreckenden Metallstreifen 38 aufweisende Dichtleiste 39 vorgesehen. Die Dichtleiste 39 ist über den Metallstreifen 38 am unteren Ende des Federbereichs 25 über Schrauben 40 verschraubt. Die Dichtleiste 39 greift dabei formschlüssig um den Federbereich 25 des unteren Verbindungsprofils 19 herum. Dabei ist ein freies Ende der Dichtleiste 39 in Bezug auf das freie Ende nach hinten umgelegt und so an dem Verbindungsprofil 19 anliegend in eine Aufnahme 41 für einen Endbereich des Nutbereichs 24 aufgenommen. Diese Aufnahme 41 erfüllt bei unterschiedlichen Paneelen 16,17 unterschiedliche Funktionen. Die Dichtleiste 39 verkeilt sich daher, wenn Auszugskräfte auf die Dichtleiste 39 wirken. Die Dichtleiste 39 bleibt daher zuverlässig am unteren Verbindungsprofil 16 gehalten. Die Dichtleiste 39 stützt sich ferner mit gegenüberliegenden Enden an einem unteren Rand des Rückwandrahmens 7 bzw. des Ladebodens 42 des Nutzfahrzeugaufbaus 2 ab.

### Bezugszeichenliste

- 1: Nutzfahrzeug
- 2: Nutzfahrzeugaufbau
- 3: Stirnwand
- 4: Seitenwände
- 5: Dach
- 6: Rückwand
- 7: Rückwandrahmen
- 8: Rolltor
- 9: Wandelement
- 10: Schienensystem
- 11: Schienenelement
- 12: Bogen
- 13: Laderaum
- 14: Rolle
- 15: Rollenhalter
- 16: Paneel
- 17: Paneel
- 18: oberes Verbindungsprofil
- 19: unteres Verbindungsprofil
- 20: Hohlprofilabschnitt
- 21: T-Nut
- 22: Nutprofil
- 23: Federprofil
- 24: Nutbereich
- 25: Federbereich
- 26: Öffnung
- 27: Paneelgrundkörper
- 28: Steg
- 29: Aufnahme
- 30: Federkreis
- 31: Freiraum
- 32: Verbindung
- 33: Anschlag
- 34: Schwenkachse
- 35: Dichtleiste
- 36: Metallstreifen
- 37: Schraube
- 38: Metallstreifen
- 39: Dichtleiste
- 40: Schraube
- 41: Aufnahme
- 42: Ladeboden
- Z: Zugmaschine

## Patentansprüche

1. Nutzfahrzeugaufbau (2) für ein Nutzfahrzeug, insbesondere Lastkraftwagen, Anhänger oder Sattelauflieger, mit einem Rolltor (8), umfassend ein von einer den Nutzfahrzeugaufbau (2) verschließenden geschlossenen Stellung in eine den Nutzfahrzeugaufbau (2) zum Be- und/oder Entladen freigebende geöffnete Stellung und zurück verstellbarem Wandelement (9) und ein Schienensystem (10) zum Führen des Wandelements (9) während des Verstellens des Wandelements (9) von der geschlossenen Stellung in die geöffnete Stellung und zurück, wobei das Wandelement (9) eine Reihe von Paneelen (16,17) aufweist, wobei aneinander angrenzende Paneele (16,17) über ein oberes Verbindungsprofil (18) und ein unteres Verbindungsprofil (19) miteinander verbunden sind, wobei wenigstens ein oberes Verbindungsprofil (18) oder ein unteres Verbindungsprofil (19) als mit einem Paneelgrundkörper verbundenes Federprofil (23) mit einem im Querschnitt wenigstens halbkreisförmigen Federbereich (25) ausgebildet ist, wobei das Federprofil (23) mit einem oberen Verbindungsprofil (18) oder einem unteren Verbindungsprofil (19) in Form eines mit einem Paneelgrundkörper (27) verbundenen Nutprofils (22) formschlüssig verbunden ist und wobei der halbkreisförmige Federbereich (25) im Querschnitt einen gedachten Federkreis (30) definiert,
**dadurch gekennzeichnet, dass**
das Federprofil (23) über wenigstens einen über den Federkreis (30) nach außen vorstehenden Steg (28) mit dem Paneelgrundkörper (27) verbunden ist und eine von außen durch das Nutprofil (22) beim Verbinden mit dem Federprofil (23) abschnittsweise zugängliche, innerhalb des Federkreises (30) angeordnete Aufnahme (29) aufweist.

2. Nutzfahrzeugaufbau nach Anspruch 1,
**dadurch gekennzeichnet, dass**
das Nutprofil (22) einen wenigstens halbkreisförmigen, korrespondierend zum wenigstens halbkreisförmigen Federbereich (25) ausgebildeten Nutbereich (24) aufweist und dass der halbkreisförmige Federbereich (25) wenigstens abschnittsweise in dem halbkreisförmigen Nutbereich (24) aufgenommen ist.

3. Nutzfahrzeugaufbau nach Anspruch 1 oder 2,
**dadurch gekennzeichnet, dass**
der wenigstens halbkreisförmige Nutbereich (24) und/oder der wenigstens halbkreisförmige Federbereich (25) wenigstens im Wesentlichen dreiviertelkreisförmig ausgebildet ist.

4. Nutzfahrzeugaufbau nach einem der Ansprüche 1 bis 3,
**dadurch gekennzeichnet, dass**
das Federprofil (23) als geschlossenes Teilprofil, insbesondere als Hohlprofilabschnitt, ausgebildet ist.

5. Nutzfahrzeugaufbau nach einem der Ansprüche 1 bis 4,
**dadurch gekennzeichnet, dass**
der wenigstens halbkreisförmige Federbereich (25) sich bis in einen Bereich zwischen dem Paneelgrundkörper (27) und dem Federprofil (23) erstreckt und dass der halbkreisförmige Nutbereich (24) abschnittsweise, insbesondere ein den halbkreisförmigen wenigstens bereichsweise bildender Rand des Nutbereichs (24), bei wenigstens im Wesentlichen parallel zueinander ausgerichteten, aneinander angrenzenden Paneelen (16,17) zwischen dem wenigstens halbkreisförmigen Federbereich (25) und den Paneelgrundkörper (27) greift.

6. Nutzfahrzeugaufbau nach einem der Ansprüche 1 bis 5,
**dadurch gekennzeichnet, dass**
das Nutprofil (22) eine Öffnung (26) zum Einwinkeln des Federprofils (23) aufweist und dass, vorzugsweise, sich der wenigstens halbkreisförmige Nutbereich (24) von beiden Seiten bis zur Öffnung (26) des Nutprofils (22) hin erstreckt.

7. Nutzfahrzeugaufbau nach einem der Ansprüche 2 bis 6,
**dadurch gekennzeichnet, dass**
ein Rand des Nutprofils (22), insbesondere im Bereich des halbkreisförmigen Nutbereichs (24), bei wenigstens im Wesentlichen parallel zueinander ausgerichteten, aneinander angrenzenden Paneelen (16,17) in Anlage an den Steg (28) des Federprofils (23) gelangt und/oder dass bei wenigstens im Wesentlichen parallel zueinander ausgerichteten, aneinander angrenzenden Paneelen (16,17) die Aufnahme (29) des Federprofils (23) abschnittsweise, insbesondere vollständig, im Bereich der Öffnung (26) des Nutprofils (22) angeordnet ist.

8. Nutzfahrzeugaufbau nach einem der Ansprüche 1 bis 7,
**dadurch gekennzeichnet, dass**
das Federprofil (23) gegenüber dem Nutprofil (22) um eine Schwenkachse (34) schwenkbar im Nutprofil (22) gehalten ist und dass, vorzugsweise, die Schwenkachse (34) wenigstens im Wesentlichen durch den Mittelpunkt des Federkreises (30) verläuft.

9. Nutzfahrzeugaufbau nach Anspruch 8,
**dadurch gekennzeichnet, dass**
sich der wenigstens halbkreisförmige Nutbereich (24) bei wenigstens im Wesentlichen parallel zueinander ausgerichteten, aneinander angrenzenden Paneelen (16,17) wenigstens im Wesentlichen bis zu einer sich parallel zu den Paneelen (16,17) und durch die Schwenkachse (34) erstreckenden Ebene erstreckt und/oder dass sich der wenigstens halbkreisförmige Nutbereich (24) bei wenigstens im Wesentlichen parallel zueinander ausgerichteten, aneinander angrenzenden Paneelen (16,17) wenigstens im Wesentlichen bis zu einer sich senkrecht zu den Paneelen (16,17) und durch die Schwenkachse (34) erstreckenden Ebene erstreckt.

10. Nutzfahrzeugaufbau nach Anspruch 8 oder 9,
**dadurch gekennzeichnet, dass**
sich der wenigstens halbkreisförmige Federbereich (25) bei wenigstens im Wesentlichen parallel zueinander ausgerichteten, aneinander angrenzenden Paneelen (16,17) wenigstens im Wesentlichen bis zu einer sich parallel zu den Paneelen (16,17) und durch die Schwenkachse (34) erstreckenden Ebene erstreckt und/oder dass sich der wenigstens halbkreisförmige Federbereich (25) bei wenigstens im Wesentlichen parallel zueinander ausgerichteten, aneinander angrenzenden Paneelen (16,17) wenigstens im Wesentlichen bis zu einer sich senkrecht zu den Paneelen (16,17) und durch die Schwenkachse (34) erstreckenden Ebene erstreckt.

11. Nutzfahrzeugaufbau nach einem der Ansprüche 1 bis 9,
**dadurch gekennzeichnet, dass** alle aneinander angrenzenden Paneele (16,17) des Wandelements (9) über ein oberes Verbindungsprofil (18) und ein unteres Verbindungsprofil (19) miteinander verbunden sind und dass die oberen Verbindungsprofile (18) und die unteren Verbindungsprofile (19) derart korrespondierend zueinander und untereinander jeweils derart gleichartig ausgebildet sind, so dass jedes obere Verbindungsprofil (18) mit jedem unteren Verbindungsprofil (19) formschlüssig verbindbar ist.

12. Nutzfahrzeugaufbau nach Anspruch 10,
**dadurch gekennzeichnet, dass**
die oberen Verbindungsprofile (18) untereinander wenigstens im Wesentlichen identisch ausgebildet sind und/oder dass die unteren Verbindungsprofile (19) untereinander wenigstens im Wesentlichen identisch ausgebildet sind.

13. Nutzfahrzeugaufbau nach einem der Ansprüche 1 bis 11,
**dadurch gekennzeichnet, dass**
das obere Verbindungsprofil (18) und das untere Verbindungsprofil (19) derart korrespondierend zueinander ausgebildet sind, so dass das untere Verbindungsprofil (19) mit dem oberen Verbindungsprofil (18) durch gegenseitiges Einwinkeln, insbesondere durch Einwinkeln wenigstens im Wesentlichen um eine Längsrichtung von wenigstens einem der aneinander angrenzenden Paneele verbindbar ist und dass, vorzugsweise, alle oberen Verbindungsprofile (18) und alle unteren Verbindungsprofile (19) jeweils derart korrespondierend zueinander ausgebildet sind, so dass jedes untere Verbindungsprofil (19) mit jedem oberen Verbindungsprofil (18) durch gegenseitiges Einwinkeln, insbesondere durch Einwinkeln wenigstens im Wesentlichen um eine Längsrichtung von wenigstens einem von zwei miteinander zu verbindenden Paneelen (16,17), verbindbar ist.

14. Nutzfahrzeugaufbau nach einem der Ansprüche 1 bis 13,
**dadurch gekennzeichnet, dass**
das Rolltor (8) an der Rückwand (6) des Nutzfahrzeugaufbaus (2) vorgesehen, insbesondere wenigstens teilweise in einem Rückwandrahmen (7) aufgenommen, ist und/oder dass der Nutzfahrzeugaufbau (2) als Kofferaufbau mit festen Seitenwänden (4), einer festen Stirnwand (3) und einem festen Dach (5) ausgebildet ist.

15. Nutzfahrzeug (1) in Form eines Lastkraftwagens, Anhängers oder Sattelaufliegers mit einem Nutzfahrzeugaufbau (2) nach einem der Ansprüche 1 bis 14.
